# EUROPEAN PATENT SPECIFICATION

(11) **EP 3 578 615 B1**
(45) Date of publication and mention of the grant of the patent: **28.06.2023**
(21) Application number: 18748324.3
(22) Date of filing: 29.01.2018
(51) Int. Cl.: C09D 163/00, B05D 7/24, B32B 27/20, B32B 27/38, C03C 17/30, C09D 5/33, C09D 7/40, C09D 183/04

(54) **COATING FOR FORMING INFRARED SHIELDING FILM, INFRARED SHIELDING FILM-EQUIPPED TRANSPARENT SUBSTRATE, AND METHOD FOR PRODUCING SAME**
BESCHICHTUNG ZUR HERSTELLUNG EINES INFRAROTSCHUTZFILMS, MIT INFRAROTSCHUTZFILM AUSGESTATTETES TRANSPARENTES SUBSTRAT UND VERFAHREN ZUR HERSTELLUNG DAVON
REVÊTEMENT POUR FORMER UN FILM DE PROTECTION CONTRE LES INFRAROUGES, SUBSTRAT TRANSPARENT ÉQUIPÉ D'UN FILM DE PROTECTION CONTRE LES INFRAROUGES ET PROCÉDÉ POUR SA PRODUCTION

(30) Priority: 03.02.2017 JP 2017018351
(43) Date of publication of application: 11.12.2019
(73) Proprietor: Mitsubishi Materials Corporation, Chiyoda-ku Tokyo 100-8117 (JP)
(72) Inventor: HIGANO, Satoko, Naka-shi, Ibaraki 311-0102 (JP); YAMASAKI, Kazuhiko, Naka-shi, Ibaraki 311-0102 (JP)
(74) Representative: Gille Hrabal Partnerschaftsgesellschaft mbB Patentanwälte
(86) International application number: PCT/JP2018/002781
(87) International publication number: WO 2018/143131

(56) References cited:
- EP-A1- 1 816 109
- EP-A1- 2 578 650
- JP-A- 2012 087 168
- JP-A- 2015 212 220
- LUO Y. ET AL: "PREPARATION AND OPTICAL PROPERTIES OF NOVEL TRANSPARENT AL-DOPED ZNO/EPOXY NANOCOMPOSITES", J. PHYS CHEM C, vol. 113, 2009, XP002800204,

## Description

### TECHNICAL FIELD

The present invention relates to a coating (coating material) for forming an infrared shielding film having high visible light transmission properties and infrared shielding properties, excellent radio wave transmission properties, and high film hardness and abrasion resistance, a transparent substrate provided with an infrared shielding film (an infrared shielding film-equipped transparent substrate), and a method for producing the transparent substrate provided with an infrared shielding film.

### BACKGROUND ART

Conventionally, there has been disclosed a glass provided with an infrared shielding film (an infrared shielding film-equipped glass) in which an infrared shielding film is formed by forming a first layer coating film having a thickness of 0.2 to 2 µm on a surface of a glass substrate, and adjacently laminating a second layer coating film having a thickness of 0.02 to 0.2 µm on the first layer coating film (for example, see Patent Document 1). In the first layer coating film, transparent conductive oxide particles having an average primary particle diameter of 100 nm or less are dispersed in a silicon oxide matrix at a mass ratio of [transparent conductive oxide particles]/[silicon oxide]=10/0.5 to 10/20, and the second layer coating film contains a silicon oxide, a silicon oxynitride, and a silicon nitride.

There has been disclosed a glass provided with an infrared shielding layer (an infrared shielding layer-equipped glass) in which an infrared shielding layer having a thickness of 100 to 1,500 nm is formed on a surface of a glass substrate (for example, see Patent Document 2). The infrared shielding layer has a configuration in which ITO particles having an average primary particle diameter of 100 nm or less are dispersed in a matrix containing a silicon oxide and a titanium oxide.

EP 1 816 109 A1 discloses an infrared shielding film-coated glass plate, wherein the infrared shielding film comprises fine ITO particles having an average primary particle diameter of at most 100 nm dispersed in a matrix containing silicon oxide and titanium oxide, and has a film thickness of from 100 to 1500 nm.

Y-S. Luo et al., "Preparation and Optical Properties of Novel Transparent Al-Doped-ZnO/Epoxy Nanocomposites", J. Phys. Chem. C 2009, 113, 9406-9411 discloses the preparation and optical properties of transparent Al-doped ZnO (AZO)/epoxy nanocomposites.

EP 2 578 650 A1 discloses a paint and an adhesive composition containing a vinyl ester resin or unsaturated polyester resin, a modifying agent, and a vinyl monomer and/or (meth)acrylate monomer. The paint and adhesive composition are highly transparent and capable of forming a coating film having antifouling properties of hardly allowing foreign objects such as fingerprints and airborne dusts to adhere to it.

EP 2 690 145 A1 discloses a liquid composition capable of forming a coating film which has sufficient ultraviolet-absorbing ability and infrared-absorbing ability, is colorless and is further excellent in weather resistance. The composition comprises an infrared absorber selected from indium tin oxide, antimony tin oxide and a composite tungsten oxide, a specific UV absorber, a dispersing agent, a binder component and a liquid medium.

### PRIOR ART DOCUMENTS

### Patent Documents

Patent Document 1: Japanese Unexamined Patent Application, First Publication No. 2005-194169 (claim 1, paragraph [0009])
Patent Document 2: Japanese Unexamined Patent Application, First Publication No. 2008-024577 (claim 1, paragraph [0010])

### DISCLOSURE OF THE INVENTION

### Problems to be Solved by the Invention

According to the glass provided with an infrared shielding film disclosed in Patent Documents 1 and 2, it has high visible light transmittance, low infrared transmittance, and high radio wave transmission properties, and it can be applied even to a portion requiring mechanical durability such as a window glass for an automobile. However, in recent years, an infrared shielding film having further increased film hardness and abrasion resistance in addition to high visible light transmission properties and infrared shielding properties has been required from the viewpoint of being used in an environment where scratches are easily formed, such as an environment where a window glass for an automobile is slid.

An object of the invention is to provide a coating for forming an infrared shielding film having high visible light transmission properties, high infrared shielding properties, excellent radio wave transmission properties, high film hardness, and high abrasion resistance, a transparent substrate provided with an infrared shielding film, and a method for producing the transparent substrate provided with an infrared shielding film.

### Solutions for Solving the Problems

According to a first aspect of the invention, there is provided a coating for forming an infrared shielding film containing: transparent oxide particles having an average primary particle diameter of 100 nm or less; and a binder containing an epoxy resin having a naphthalene skeleton in a molecular structure, a hydrolyzed condensate of a silicon alkoxide, and a solvent, wherein the transparent oxide particles are as defined in claim 1, in which a mass ratio of the transparent oxide particles to a solid content of the binder after drying and curing (transparent oxide particles/solid content of binder after drying and curing) is 5/95 to 80/20, and in the case where the solid content of the binder after drying and curing is set to 100 mass%, the amount of the epoxy resin is 40 to 90 mass% and the amount of the hydrolyzed condensate of a silicon alkoxide is 10 to 60 mass%.

According to a second aspect of the invention, there is provided a transparent substrate provided with an infrared shielding film including: a transparent substrate; and an infrared shielding film formed on a surface of the transparent substrate, in which transparent oxide particles having an average primary particle diameter of 100 nm or less are dispersed in a matrix containing an epoxy resin having a naphthalene skeleton in a molecular structure and a silicon oxide.

According to a third aspect of the invention, there is provided a method for producing a transparent substrate provided with an infrared shielding film, including forming an infrared shielding film by applying the coating for forming an infrared shielding film according to the first aspect to a surface of a transparent substrate.

### Effects of the Invention

In the coating for forming an infrared shielding film according to the first aspect of the invention, transparent oxide particles as defined in claim 1 having an average primary particle diameter of 100 nm or less, and a binder containing an epoxy resin having a naphthalene skeleton in a molecular structure, a hydrolyzed condensate of a silicon alkoxide, and a solvent are contained, and a mass ratio of the transparent oxide particles to a solid content of the binder after drying and curing (transparent oxide particles/solid content of binder after drying and curing) is 5/95 to 80/20. In the coating for forming an infrared shielding film having the above-described configuration, the transparent oxide particles having an average primary particle diameter of 100 nm or less are contained at a predetermined mass ratio with respect to the binder, and the binder does not adversely affect visible light transmission properties and infrared shielding properties (hereinafter, may be referred to as spectral characteristics) of an infrared shielding film formed using the coating. Thus, the infrared shielding film has high visible light transmission properties, high infrared shielding properties, and excellent radio wave transmission properties. In addition, in the case where the solid content of the binder of the coating after drying and curing is set to 100 mass%, the amount of the epoxy resin having a naphthalene skeleton in a molecular structure is 40 to 90 mass% and the amount of the hydrolyzed condensate of a silicon alkoxide is 10 to 60 mass%. Therefore, an infrared shielding film formed using the coating has high film hardness and high abrasion resistance. In addition, due to the binder containing the epoxy resin, the film can exhibit high film strength and high abrasion resistance while having a low viscosity and rapid curability. Furthermore, adhesion strength can be increased when the infrared shielding film is formed on a surface of a glass substrate or a resin film.

In the transparent substrate provided with an infrared shielding film according to the second aspect of the invention, the transparent oxide particles having an average primary particle diameter of 100 nm or less are dispersed in a matrix containing an epoxy resin and a silicon oxide which does not adversely affect the spectral characteristics and radio wave transmission properties of an infrared shielding film. Therefore, the infrared shielding film on the surface of the transparent substrate has high visible light transmission properties, high infrared shielding properties, and excellent radio wave transmission properties. In addition, since the matrix contains an epoxy resin having a naphthalene skeleton in a molecular structure, the infrared shielding film has high film strength and high abrasion resistance, and the adhesion strength of the film to the transparent substrate is also high.

Due to the method for producing a transparent substrate provided with an infrared shielding film according to the third aspect of the invention, it is possible to obtain a transparent substrate provided with an infrared shielding film in which an infrared shielding film is adhered to a transparent substrate at a high adhesion strength.

### BRIEF DESCRIPTION OF THE DRAWINGS

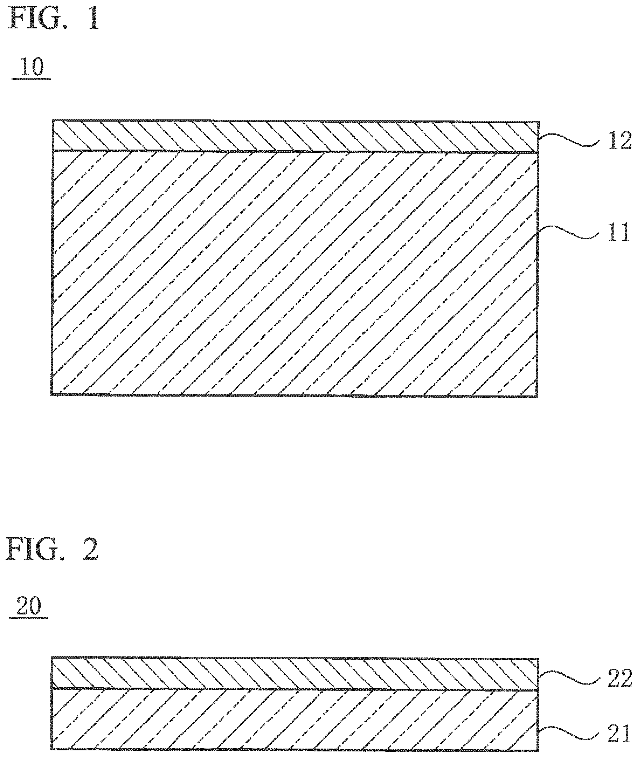

FIG. 1 is a cross-sectional view of a glass provided with an infrared shielding film (an infrared shielding film-equipped glass) in which an infrared shielding film is formed on a surface of a transparent glass substrate using a coating for forming an infrared shielding film according to an embodiment.
FIG. 2 is a cross-sectional view of a resin film provided with an infrared shielding film (an infrared shielding film-equipped resin film) in which an infrared shielding film is formed on a surface of a transparent resin film using a coating for forming an infrared shielding film according to an embodiment.

### EMBODIMENTS FOR CARRYING OUT THE INVENTION

Next, embodiments of the invention will be described.

### [Transparent Oxide Particles]

As transparent oxide particles contained in a coating for forming an infrared shielding film according to this embodiment, metal oxide particles selected from a tin-doped indium oxide (ITO), an antimony-doped tin oxide (ATO), an indium oxide (In₂O₃), or a zinc oxide (ZnO) are used. Particularly, ITO particles are preferable since the ITO particles exhibit more excellent transparency. The average primary particle diameter of the transparent oxide particles is 100 nm or less, and preferably 10 to 60 nm. In the case where the average primary particle diameter is greater than 100 nm, the visible light transmittance is reduced due to light scattering on the particle surface and clouding. The particle diameter is measured by software (trade name: PC SEM) using a scanning electron microscope (model name: SU-8000, manufactured by Hitachi High-Technologies Corporation). 300 particles are measured at a magnification of 5,000, and the measured values are averaged to obtain an average value thereof.

In general, ITO particles are produced as follows. An aqueous solution containing In and a small amount of a water-soluble salt of Sn is reacted with alkali to coprecipitate hydroxides of In and Sn, and thereby, a raw material is produced. The coprecipitated product is converted into an oxide by heating and sintering in the atmosphere and thereby, ITO particles are produced. Instead of the coprecipitated product, a mixture of hydroxides and/or oxides of In and Sn can also be used as a raw material. In this embodiment, ITO particles produced by such a conventional method or ITO particles commercially available as transparent nanoparticles can be used as they are.

The transparent oxide particles are preferably in the form of a dispersion (dispersion liquid) of transparent oxide particles in which the particles are dispersed in a dispersion medium, in order to be uniformly mixed with a binder to be described below. The dispersion medium is preferably the same as a solvent of the binder from the viewpoint of compatibility with the solvent of the binder to be described below.

### [Binder]

The binder contained in the coating for forming an infrared shielding film according to this embodiment contains an epoxy resin having a naphthalene skeleton in a molecular structure, a hydrolyzed condensate of a silicon alkoxide (hydrolysis-condensation product of a silicon alkoxide), and a solvent.

### [Epoxy Resin Having Naphthalene Skeleton in Molecular Structure]

The epoxy resin having a naphthalene skeleton in a molecular structure contained in the binder according to this embodiment is an epoxy resin having a skeleton containing at least one naphthalene ring in one molecule, and examples thereof include a naphthol type and a naphthalene diol type. Examples of the naphthalene type epoxy resin include 1,3-diglycidyl ether naphthalene, 1,4-diglycidyl ether naphthalene, 1,5-diglycidyl ether naphthalene, 1,6-diglycidyl ether naphthalene, 2,6-diglycidyl ether naphthalene, 2,7-diglycidyl ether naphthalene, 1,3-diglycidyl ester naphthalene, 1,4-diglycidyl ester naphthalene, 1,5-diglycidyl ester naphthalene, 1,6-diglycidyl ester naphthalene, 2,6-diglycidyl ester naphthalene, 2,7-diglycidyl ester naphthalene, 1,3-tetraglycidyl amine naphthalene, 1,4-tetraglycidyl amine naphthalene, 1,5-tetraglycidyl amine naphthalene, 1,6-tetraglycidyl amine naphthalene, 1,8-tetraglycidyl amine naphthalene, 2,6-tetraglycidyl amine naphthalene, and 2,7-tetraglycidyl amine naphthalene. As the epoxy resin having a naphthalene skeleton in a molecular structure, the above-described naphthalene type epoxy resin may be contained, and one of the naphthalene type epoxy resins may be used alone or the combination of two or more thereof may be used. Particularly, a liquid (liquid at 25°C) bifunctional naphthalene type epoxy resin is preferable from the viewpoint of its low viscosity. The liquid epoxy resin may be used in combination with a solid epoxy resin. By using the epoxy resin having a naphthalene skeleton in a molecular structure, a coating for forming an infrared shielding film having high film hardness, high wear resistance, and excellent heat resistance can be obtained.

### [Hydrolyzed Condensate of Silicon Alkoxide]

The hydrolyzed condensate of a silicon alkoxide contained in the binder according to this embodiment is generated by hydrolysis (condensation) of a silicon alkoxide represented by Formula (1).

Si(OR)₄ (1)

(in Formula (1), R represents an alkyl group having 1 to 5 carbon atoms.)

The reason why the binder according to this embodiment contains the hydrolyzed condensate of a silicon alkoxide is that due to high reactivity, the hardness of a film obtained by applying a coating containing the binder is maintained. For example, in the case of a hydrolyzed condensate of a silicon alkoxide which has an alkyl group having 6 or more carbon atoms, the hydrolysis reaction is slow, and thus it takes time for production. In addition, there is a concern that the hardness of a film obtained by applying a coating containing the obtained binder may decrease.

In the case where a silicon alkoxide is used in the binder, a problem occurs in which a coating containing the binder has a low viscosity, and thereby, it becomes difficult to obtain a desired film thickness, or a state of the binder is easy to change depending on changes in environment such as temperature and humidity. Moreover, in the case where no attention is given for pH and the like in the binder in order to control the hydrolysis reaction of a silicon alkoxide, there is a concern that silica particles may be formed. Therefore, handling of the binder becomes complicated.

Specific examples of the silicon alkoxide represented by Formula (1) include tetramethoxysilane, tetraethoxysilane, methyltrimethoxysilane, ethyltrimethoxysilane, methyltriethoxysilane, ethyltriethoxysilane, vinyltrimethoxysilane, vinyltriethoxysilane, phenyltrimethoxysilane, and phenyltriethoxysilane. Among these, tetramethoxysilane is preferable since a film having high hardness can be obtained. In obtaining a hydrolyzed condensate, a single type of the silicon alkoxide may be used, or two or more types thereof may be mixed at a predetermined ratio such that the product obtained by hydrolysis (condensation) of the silicon alkoxides is contained.

In the case where a hydrolyzed condensate is formed by mixing two types of silicon alkoxides, for example, a mixing ratio between a silicon alkoxide (for example, tetramethoxysilane: TMOS) and another silicon alkoxide (for example, methyltrimethoxysilane: MTMS) is set to 1:0.5 in terms of mass ratio TMOS:MTMS.

In the case where a hydrolyzed condensate of a single type of silicon alkoxide is formed, the single type of silicon alkoxide is hydrolyzed (condensed) in an organic solvent. Specifically, 0.5 to 2.0 parts by mass of water, 0.005 to 0.5 parts by mass of an inorganic acid or organic acid, and 1.0 to 5.0 parts by mass of an organic solvent are preferably mixed with 1 part by mass of a single type of silicon alkoxide to cause a hydrolysis reaction of the single type of silicon alkoxide, and thereby, a hydrolyzed condensate of the silicon alkoxide can be obtained. In the case where a hydrolyzed condensate is formed by mixing two types of silicon alkoxides, the silicon alkoxides are hydrolyzed (condensed) in an organic solvent. Specifically, 0.5 to 2.0 parts by mass of water, 0.005 to 0.5 parts by mass of an inorganic acid or organic acid and 1.0 to 5.0 parts by mass of an organic solvent are preferably mixed with 1 part by mass of a total of the two types of silicon alkoxides to cause a hydrolysis reaction of the two types of silicon alkoxides, and thereby, a hydrolyzed condensate of the silicon alkoxides can be obtained. Here, the reasons why it is preferable to set the ratio of the water to be in a range of 0.5 to 2.0 parts by mass are as follows. In the case where the ratio of the water is less than the lower limit, the hydrolysis and condensation reaction of the silicon alkoxides is not sufficiently caused, and thus sufficient film hardness is not obtained. In the case where the ratio of the water is greater than the upper limit, a problem may occur in which the reaction liquid gelates during the hydrolysis reaction. In addition, the adhesion to a substrate may be reduced. The ratio of the water is particularly preferably 0.8 to 3.0 parts by mass. It is desirable to use ion-exchanged water, pure water, or the like as water to prevent the mixing of impurities.

Examples of the inorganic acid or organic acid include inorganic acids such as a hydrochloric acid, a nitric acid, and a phosphoric acid, and organic acids such as a formic acid, an oxalic acid, and an acetic acid. Among these, a formic acid is particularly preferably used. The reason for this is that the inorganic acid or organic acid functions as an acidic catalyst for promoting the hydrolysis reaction, and a film having more excellent transparency is easily formed using a formic acid as a catalyst. The formic acid is more effective in preventing the promotion of nonuniform gelation in the film after the film formation than in the case where another inorganic acid or organic acid is used. In addition, the reasons why it is preferable to set the ratio of the inorganic acid or organic acid to be in the above-described range are as follows. In the case where the ratio of the inorganic acid or organic acid is less than the lower limit, the film hardness does not sufficiently increase due to poor reactivity. In the case where the ratio of the inorganic acid or organic acid is greater than the upper limit, a problem may occur in which the substrate corrodes due to the residual acid although there is no influence on the reactivity. The ratio of the inorganic acid or organic acid is particularly preferably 0.008 to 0.2 parts by mass.

An alcohol, a ketone, a glycol ether, or a glycol ether acetate is preferably used as the organic solvent. The reason why it is preferable to use the alcohol, the ketone, the glycol ether, or the glycol ether acetate as the organic solvent is that the coatability of a coating for forming an infrared shielding film to be finally obtained is improved. In addition, for example, in the case where a hydrolyzed condensate of two or more types of silicon alkoxides is used, the silicon alkoxides are easily mixed. Furthermore, the hydrolyzed condensate can be easily mixed with the epoxy resin having a naphthalene structure in a molecular structure.

Examples of the alcohol include methanol, ethanol, propanol, and isopropyl alcohol (IPA). Examples of the ketone include acetone, methyl ethyl ketone (MEK), and methyl isobutyl ketone (MIBK). Examples of the glycol ether include ethylene glycol monomethyl ether, diethylene glycol monomethyl ether, propylene glycol monomethyl ether, dipropylene glycol monomethyl ether, ethylene glycol monoethyl ether, diethylene glycol monoethyl ether, propylene glycol monoethyl ether, and dipropylene glycol monoethyl ether. Examples of the glycol ether acetate include ethylene glycol monomethyl ether acetate, diethylene glycol monomethyl ether acetate, propylene glycol monomethyl ether acetate, dipropylene glycol monomethyl ether acetate, ethylene glycol monoethyl ether acetate, diethylene glycol monoethyl ether acetate, propylene glycol monoethyl ether acetate, and dipropylene glycol monoethyl ether acetate. Among these, ethanol, IPA, MEK, MIBK, ethylene glycol monomethyl ether, ethylene glycol monomethyl ether acetate, propylene glycol monomethyl ether, or propylene glycol monomethyl ether acetate is particularly preferable since the hydrolysis reaction can be easily controlled and good coatability can be obtained in film formation.

In the case where the ratio of the organic solvent is equal to or less than the lower limit, a problem easily occurs in which the binder formed using a hydrolysate of a silicon alkoxide gelates, and it is difficult to obtain a transparent and uniform film. The adhesion to a substrate may also be reduced. In the case where the ratio of the organic solvent is greater than the upper limit, it leads to a reduction in reactivity of the hydrolysis and the like, and thus a problem occurs in film curability. Accordingly, a film having excellent hardness and abrasion resistance may not be obtained. The ratio of the organic solvent is particularly preferably 1.5 to 3.5 parts by mass.

### [Binder Preparation Method]

The binder according to this embodiment is prepared by uniformly mixing the epoxy resin having a naphthalene skeleton in a molecular structure, the hydrolyzed condensate of a silicon alkoxide, and a solvent. Regarding the mixing ratio of the epoxy resin and the hydrolyzed condensate of a silicon alkoxide, the amount of the epoxy resin having a naphthalene skeleton in a molecular structure is set to be in a range of 40 to 90 mass%, and preferably 40 to 70 mass%, and the amount of the hydrolyzed condensate of a silicon alkoxide is set to be in a range of 10 to 60 mass%, and preferably 30 to 60 mass% in the case where the solid content of the binder after drying and curing is 100 mass%. In the case where the amount of the epoxy resin is less than 40 mass% and the amount of the hydrolyzed condensate is greater than 60 mass%, the infrared shielding film formed using this binder easily cracks due to stress during curing of the film by drying or sintering, and thus the film has low hardness and low visible light transmittance. In the case where the amount of the epoxy resin is greater than 90 mass% and the amount of the hydrolyzed condensate is less than 10 mass%, the infrared shielding film formed using this binder has poor rapid curability during sintering, and the film hardness is not sufficiently increased. Accordingly, the film has low hardness and poor abrasion resistance.

The solvent contained in the binder is preferably the same as the above-described organic solvent from the viewpoint of compatibility with the hydrolyzed condensate of a silicon alkoxide. The amount of the solvent is determined so as to obtain a suitable viscosity for coating in consideration of the amount of the dispersion medium for dispersing the above-described transparent oxide particles and the amount of the organic solvent when a finally obtained coating for forming an infrared shielding film is applied to the surface of a glass substrate or a resin film.

### [Method for Preparing Coating for Forming Infrared Shielding Film]

The coating for forming an infrared shielding film according to this embodiment is prepared by mixing the transparent oxide particles, preferably a dispersion of the transparent oxide particles in a state in which the transparent oxide particles are dispersed in a dispersion medium, with the binder. The mass of the solid content derived from the epoxy resin having a naphthalene skeleton in a molecular structure is represented by X, the mass of the solid content derived from the hydrolyzed condensate of a silicon alkoxide is represented by Y, the mass of the transparent oxide particles is represented by Z, and the mass of the solid content of the binder after drying and curing is represented by (X+Y). In this case, the transparent oxide particles are mixed such that a mass ratio of the transparent oxide particles (Z) to the solid content of the binder after drying and curing (X+Y) (transparent oxide particles/solid content of binder after drying and curing=Z/(X+Y)) is 5/95 to 80/20, and preferably 20/80 to 60/40 in consideration of spectral characteristics, film strength, and abrasion resistance of an infrared shielding film to be obtained. In the case where the mass ratio is less than 5/95, the ratio of the transparent oxide particles is too small, and thus the near-infrared ray cut rate is low and the film hardness does not increase. In the case where the mass ratio is greater than 80/20, the ratio of the transparent oxide particles is too large, and thus the near-infrared ray cut rate is high. However, since the amount of the binder is too small, the abrasion resistance becomes low. The mass ratio of the transparent oxide particles (Z) to the solid content of the binder after drying and curing (X+Y) is more preferably 30/70 to 60/40, and even more preferably 40/60 to 55/45. However, the mass ratio is not limited thereto.

### (Method for Forming Infrared Shielding Film (Method for Producing Transparent Substrate Provided with Infrared Shielding Film)

The coating for forming an infrared shielding film prepared as described above is applied to a surface of a transparent substrate, and thus an infrared shielding film is formed. Examples of the transparent substrate include a transparent glass substrate, a transparent resin substrate, and a transparent resin film. Examples of the glass of the glass substrate include glass having high visible light transmittance such as clear glass, high transmission glass, soda-lime glass, and green glass. Examples of the resin of the resin substrate or the resin film include acrylic resins such as polymethyl methacrylate, aromatic polycarbonate resins such as polyphenylene carbonate, and aromatic polyester resins such as polyethylene terephthalate (PET). The coating for forming an infrared shielding film is applied to the surface of the transparent substrate, a coated film is dried at a predetermined temperature, and then heat-treated to form an infrared shielding film having a thickness of 0.1 to 2.5 µm, preferably 0.5 to 2.0 µm on the surface of the transparent substrate. The temperature in drying the coating for forming an infrared shielding film is not particularly limited. However, in the case where the transparent substrate is a transparent glass substrate, the temperature can be set to be in a range of 50°C to 250°C, and in the case where the substrate is a transparent resin film, the temperature can be set to be in a range of 50°C to 130°C. The drying time may be 5 to 60 minutes, but is not limited thereto. In the case where the transparent substrate is a transparent glass substrate, the substrate is heat-treated by being held at a temperature of 50°C to 300°C, preferably 50°C to 250°C, for 5 to 60 minutes under an oxidizing atmosphere. The temperature and the holding time are determined according to the film hardness to be required. Thus, as shown in FIG. 1, a glass provided with an infrared shielding film 10 (a transparent substrate provided with an infrared shielding film) in which an infrared shielding film 12 is formed on a surface of a transparent glass substrate 11 is formed. In the case where the substrate is a transparent resin film, the substrate is heat-treated by being held at a temperature of 40°C to 120°C for 5 to 120 minutes under an oxidizing atmosphere. The temperature and the holding time are determined according to the film hardness to be required and the heat resistance of the base film. Thus, as shown in FIG. 2, a resin film provided with an infrared shielding film 20 (a transparent substrate provided with an infrared shielding film) in which an infrared shielding film 22 is formed on a surface of a transparent resin film 21 is formed. In the case where the thickness of the infrared shielding film 12 or 22 is less than 0.1 µm, the amount of the transparent oxide particles is small, and thus a problem occurs in which the infrared ray cutting performance is not sufficiently exhibited. In the case where the thickness of the infrared shielding film is greater than 2.5 µm, a problem occurs in which stress is concentrated inside the film, and cracks occur.

### EXAMPLES

Next, examples of the invention will be described in detail together with comparative examples.

### [7 Types of Resins]

Table 1 shows 5 types of resins used in Examples 1 to 11 and Comparative Examples 1 and 4 to 7 and resins used in Comparative Examples 2 and 3. Table 1 shows J1: EXA-4700 (manufactured by DIC Corporation), J2: HP-4700 (manufactured by DIC Corporation), J3: HP-4710 (manufactured by DIC Corporation), J4: HP-6000 (manufactured by DIC Corporation), and J5: HP-4032SS (manufactured by DIC Corporation) as an epoxy resin having a naphthalene skeleton in a molecular structure. In addition, J6: EPICLON 850 (manufactured by DIC Corporation) is shown as an epoxy resin having no naphthalene skeleton, and J7: ACRYDIC A-9585 (manufactured by DIC Corporation) is shown as an acrylic resin which is not an epoxy resin.

### [4 Types of Silicon Alkoxides]

Table 2 shows 4 types of silicon alkoxides used in Examples 1 to 11 and Comparative Examples 1 to 7. Table 2 shows A: tetramethoxysilane, B: tetraethoxysilane, C: phenyltrimethoxysilane, and D: a mixture of tetramethoxysilane and methyltrimethoxysilane. In the case where two types of silicon alkoxides were used in combination, a mass ratio TMOS:MTMS between tetramethoxysilane (TMOS) and methyltrimethoxysilane (MTMS) was set to 1:0.5.

**Table 1**

| Type | Details of Resins | |
|---|---|---|
| J1 | Epoxy Resin 1 Having Naphthalene Skeleton | EXA-4700 |
| J2 | Epoxy Resin 2 Having Naphthalene Skeleton | HP-4700 |
| J3 | Epoxy Resin 3 Having Naphthalene Skeleton | HP-4710 |
| J4 | Epoxy Resin 4 Having Naphthalene Skeleton | HP-6000 |
| J5 | Epoxy Resin 5 Having Naphthalene Skeleton | HP-4032SS |
| J6 | Epoxy Resin Having No Naphthalene Skeleton | EPICLON 850 |
| J7 | Acrylic Resin | ACRYDIC A-9585 |

**Table 2**

| Type | Details of Silicon Alkoxides for Hydrolysis |
|---|---|
| A | Tetramethoxysilane |
| B | Tetraethoxysilane |
| C | Phenyltrimethoxysilane |
| D | Tetramethoxysilane and Methyltrimethoxysilane |

### <Example 1>

A single type of silicon alkoxide, that is, A: tetramethoxysilane was used as a hydrolyzed condensate of silicon alkoxide, and 1.2 parts by mass of water, 0.02 parts by mass of a formic acid, and 2.0 parts by mass of IPA as an organic solvent were added to 1 part by mass of tetramethoxysilane. The mixture was stirred for 1 hour at 55°C to obtain a hydrolyzed condensate of the silicon alkoxide. The hydrolyzed condensate was mixed with J1: EXA-4700 (manufactured by DIC Corporation) as an epoxy resin having a naphthalene skeleton in a molecular structure, and thus a binder was obtained. Specifically, the binder was obtained by mixing 50 mass% of the solid content derived from the epoxy resin having a naphthalene skeleton in a molecular structure with 50 mass% of the solid content derived from the hydrolyzed condensate of the silicon alkoxide in the case where the solid content of the binder after drying and curing was 100 mass%. Next, a dispersion of ITO particles was prepared in which ITO particles having an average primary particle diameter of 100 nm as transparent oxide particles were dispersed in IPA. The dispersion of ITO particles was mixed with the binder obtained by the above-described mixing such that the mass ratio of the transparent oxide particles to the solid content of the binder after drying and curing (transparent oxide particles/solid content of binder after drying and curing) was 5/95. Then, IPA was added as an organic solvent to obtain a viscosity suitable for coating, and thus a coating for forming an infrared shielding film was prepared. IPA was added such that the ratio thereof was 35 mass% of the coating for forming an infrared shielding film.

### <Examples 2 to 11 and Comparative Examples 1 to 7>

In Examples 2 to 11 and Comparative Examples 1 to 7, as transparent oxide particles, transparent oxide particles having an average primary particle diameter shown in Table 3 were selected. As a binder, resins and silicon alkoxides for hydrolysis of the types shown in Tables 1 and 2 were selected. Further, solvents of the types shown in Table 3 were selected. The transparent oxide particles and the binder were mixed at a mass ratio of the transparent oxide particles to the solid content of the binder after drying and curing (transparent oxide particles/solid content of binder after drying and curing) as shown in Table 3, and thus a coating for forming an infrared shielding film was prepared. The contents of the resin, the hydrolyzed condensate of a silicon alkoxide, and the solvent in the binder were set to the values shown in Table 3. In the solvent, EtOH represents ethanol, MEK represents methyl ethyl ketone, PGME represents propylene glycol 1-monomethyl ether, PGMEA represents propylene glycol 1-monomethyl ether 2-acetate, and MIBK represents methyl isobutyl ketone.

**Table 3**

| | Transparent Oxide Particles | | Binder | | | | | | Transparent Oxide Particles/Solid Content of Binder After Drying and Curing |
|---|---|---|---|---|---|---|---|---|---|
| | Type | Average Primary Particle Diameter (nm) | Resin | | Hydrolyzed Condensate of Silicon Alkoxide | | Solvent | | |
| | | | Type | Content (mass%) | Type | Content (mass%) | Type | Content (mass%) | |
| Example 1 | ITO | 100 | J1 | 50 | A | 50 | IPA | 35 | 5/95 |
| Example 2 | ITO | 20 | J2 | 60 | A | 40 | MEK | 40 | 20/80 |
| Example 3 | ITO | 15 | J3 | 50 | B | 50 | PGMEA | 50 | 50/50 |
| Example 4 | ITO | 50 | J4 | 70 | A | 30 | EtOH | 40 | 30/70 |
| Example 5 | ITO | 35 | J5 | 40 | B | 60 | PGME | 35 | 60/40 |
| Example 6 | ITO | 25 | J1 | 80 | B | 20 | PGMEA | 60 | 80/20 |
| Example 7 | ITO | 15 | J2 | 90 | B | 10 | MEK | 55 | 40/20 |
| Example 8 | ITO | 40 | J2 | 60 | C | 40 | MIBK | 30 | 35/65 |
| Example 9 | ATO | 20 | J1 | 50 | C | 50 | IPA | 40 | 30/70 |
| Example 10 | In₂O₃ | 30 | J1 | 60 | D | 40 | PGME | 50 | 20/80 |
| Example 11 | ZnO | 10 | J1 | 50 | D | 50 | MEK | 65 | 20/80 |
| Comparative Example 1 | ITO | 110 | J1 | 50 | A | 50 | IPA | 35 | 50/50 |
| Comparative Example 2 | ITO | 50 | J6 | 50 | A | 50 | MEK | 25 | 50/50 |
| Comparative Example 3 | ITO | 50 | J7 | 50 | A | 50 | PGME | 35 | 50/50 |
| Comparative Example 4 | ITO | 40 | J1 | 50 | A | 50 | IPA | 30 | 4/96 |
| Comparative Example 5 | ITO | 25 | J1 | 50 | A | 50 | IPA | 30 | 82/18 |
| Comparative Example 6 | ITO | 40 | J2 | 35 | B | 65 | PGME | 35 | 50/50 |
| Comparative Example 7 | ITO | 40 | J2 | 95 | B | 5 | PGME | 35 | 50/50 |

### <Comparison Test and Evaluation>

Each of the coatings for forming an infrared shielding film obtained in Examples 1 to 11 and Comparative Examples 1 to 7 was spin-coated on a surface of a transparent soda-lime glass substrate having a dimension of 50 mm × 50 mm and a thickness of 0.7 mm for 60 seconds at a rotation speed of 1,000 rpm. The coated film was dried at 130°C for 20 minutes, and then sintered at 200°C for 5 minutes. Thereby, 18 types of glasses provided with infrared shielding films for evaluation were obtained. Regarding the 18 types of infrared shielding films formed on the surface of the glass substrates, film thickness, visible light transmittance, near-infrared transmittance (near-infrared ray cut rate), film hardness, abrasion resistance of the film, average primary particle diameter of the transparent oxide particles in the infrared shielding film, and presence or absence of the naphthalene skeleton in the matrix component of the infrared shielding film were evaluated by the following methods. The results thereof are shown in Table 4.

### (1) Film Thickness

The film thickness was measured by cross-sectional observation with a scanning electron microscope (SU-8000 manufactured by Hitachi High-Technologies Corporation).

### (2) Visible Light Transmittance and Near-Infrared Transmittance

The visible light transmittance at a wavelength of 450 nm and the near-infrared transmittance at a wavelength of 1,300 nm were measured using a spectrophotometer (U-4100 manufactured by Hitachi High-Technologies Corporation) according to the standards (JIS R 3216-1998). In the evaluation of the visible light transmittance, a case where the transmittance of the glass provided with an infrared shielding film at a wavelength of 450 nm was 90% or greater was evaluated as "good", a case where the transmittance was 85% or greater and less than 90% was evaluated as "fair", and a case where the transmittance was less than 85% was evaluated as "poor". In the evaluation of the near-infrared transmittance, a case where the transmittance of the glass provided with an infrared shielding film at a wavelength of 1,300 nm was 5% or greater was evaluated as "poor", a case where the transmittance was less than 5% and 2% or greater was evaluated as "good", and a case where the transmittance was less than 2% was evaluated as "excellent".

### (3) Film Hardness

Pencils for evaluation specified in JIS-S6006 were used, a predetermined surface was repeatedly scratched three times with the pencil of each hardness using a weight of 750 g according to the pencil hardness evaluation method specified in JIS-K5400, and the hardness at which one scratch was formed was measured. The higher the number was, the higher the hardness was. The film hardness was evaluated as excellent in the case where the hardness was 4H or greater, and the film hardness was evaluated as poor in the case where the hardness was less than 4H.

### (4) Abrasion Resistance of Film

The abrasion resistance of the film was evaluated based on the presence or absence of scratches on the film surface after Steel Wool #0000 was slid on the film surface at a strength of about 100 g/cm² and reciprocated 20 times. A case where no scratches were formed was evaluated as "good", and a case where scratches were formed was evaluated as "poor".

### (5) Average Primary Particle Diameter of Transparent Oxide Particles in Infrared Shielding Film

The average primary particle diameter of the transparent oxide particles in the infrared shielding film was obtained as follows.

A test piece having a film formed on a surface of a transparent substrate was put into a plastic container for filling resin and observing a sample. The test piece was vertically erected, and an epoxy resin for filling resin was put into the plastic container for filling resin and observing a sample, and dried for 8 hours or longer at room temperature to cure the epoxy resin. Then, the cross-section was polished up to an observation position of the sample to obtain a processed cross-section having no unevenness. Next, the layer containing transparent oxide particles was measured by software (trade name: PC SEM) using a scanning electron microscope (model name: SU-8000, manufactured by Hitachi High-Technologies Corporation). 300 particles were measured in five fields of view at a magnification of 5,000, and the measured values were averaged to obtain the average value thereof.

### (6) Presence or Absence of Naphthalene Skeleton in Matrix Component of Infrared Shielding Film

Regarding the 18 types of infrared shielding films, the naphthalene skeleton in the matrix component of the film was investigated by a pyrolysis gas chromatography method. In the pyrolysis gas chromatography method (PyGC method), the matrix components in the film were specified by qualitative and quantitative determination of the pyrolysis product. The matrix components of the infrared shielding film were analyzed mainly by an infrared spectroscopy method (IR method). The coating for forming an infrared shielding film obtained by sintering contained transparent oxide particles and binder solids, and among these, only the binder components were formed into a powder and the powder was used for measurement. The total reflection method (ATR method) was used in the case where a coating film itself was used to analyze.

**Table 4**

| | Infrared Shielding Film | | Transmittance of Infrared Shielding Film | | Evaluation of Infrared Shielding Film | | | | |
|---|---|---|---|---|---|---|---|---|---|
| | Film Thickness (µm) | Average Primary Particle Diameter (nm) | Visible Light Rays (450 nm) | Near-Infrared Rays (1,300 nm) | Infrared Ray Cut Rate | Near-Infrared Ray Cut Rate | Film Hardness | Abrasion Resistance | Presence or Absence of Naphthalene Skeleton in Matrix Component of Film |
| Example 1 | 2.0 | 100 | 91.7 | 3.1 | Good | Good | 5H | Good | Presence |
| Example 2 | 1.6 | 20 | 92.2 | 2.3 | Good | Good | 6H | Good | Presence |
| Example 3 | 2.2 | 15 | 91.8 | 0.9 | Good | Excellent | 6H | Good | Presence |
| Example 4 | 3.0 | 50 | 90.5 | 0.6 | Good | Excellent | 4H | Good | Presence |
| Example 5 | 2.5 | 35 | 91.0 | 4.2 | Good | Good | 6H | Good | Presence |
| Example 6 | 2.0 | 25 | 91.3 | 0.4 | Good | Excellent | 4H | Good | Presence |
| Example 7 | 2.4 | 15 | 92.4 | 1.5 | Good | Good | 5H | Good | Presence |
| Example 8 | 3.0 | 40 | 90.8 | 1.2 | Good | Good | 5H | Good | Presence |
| Example 9 | 2.5 | 20 | 92.1 | 2.4 | Good | Good | 6H | Good | Presence |
| Example 10 | 2.2 | 30 | 90.9 | 1.6 | Good | Good | 6H | Good | Presence |
| Example 11 | 2.0 | 10 | 91.0 | 4.0 | Good | Good | 6H | Good | Presence |
| Comparative Example 1 | 2.0 | 110 | 82.1 | 4.8 | Poor | Good | 5H | Good | Presence |
| Comparative Example 2 | 2.1 | 50 | 90.1 | 3.1 | Good | Good | 3H | Poor | Absence |
| Comparative Example 3 | 2.0 | 50 | 90.5 | 4.3 | Good | Good | H | Poor | Absence |
| Comparative Example 4 | 2.2 | 40 | 93.5 | 5.1 | Good | Poor | 3H | Good | Presence |
| Comparative Example 5 | 1.0 | 25 | 89.9 | 0.5 | Fair | Excellent | 4H | Poor | Presence |
| Comparative Example 6 | 1.8 | 40 | 81.5 | 4.3 | Poor | Good | 3H | Good | Presence |
| Comparative Example 7 | 2.0 | 40 | 90.0 | 2.6 | Good | Good | 2H | Poor | Presence |

As shown in Table 4, in the infrared shielding film of Comparative Example 1 formed using transparent oxide particles (ITO particles) having an average primary particle diameter of 110 nm, the ITO particles in the film had an average primary particle diameter of 110 nm which was too large, and thus the visible light transmittance was poor. In each of the infrared shielding film of Comparative Example 2 formed using an epoxy resin having no naphthalene skeleton as a resin and the infrared shielding film of Comparative Example 3 formed using an acrylic resin, there was no naphthalene skeleton in the film, and thus the film surface had low strength, the film hardness was 3H and H that was poor, and the abrasion resistance of the film was poor. In the infrared shielding film of Comparative Example 4 in which the ratio of the transparent oxide particles / the solid content of the binder after drying and curing was 4/96, the ratio of the transparent oxide particles was too small, and thus the near-infrared ray cut rate was poor, and the film hardness was 3H that was poor.

In the infrared shielding film of Comparative Example 5 in which the ratio of the transparent oxide particles / the solid content of the binder after drying and curing was 82/18, the ratio of the transparent oxide particles was too large, and thus the near-infrared ray cut rate was excellent. However, the abrasion resistance of the film was poor due to a too small amount of the binder. In the infrared shielding film of Comparative Example 6 formed by applying a coating containing 35 mass% of a resin and 65 mass% of a hydrolyzed condensate of a silicon alkoxide in the solid content of the binder after drying and curing, the amount of the hydrolyzed condensate of a silicon alkoxide was large, and thus micro-cracks occurred due to film stress during sintering. Accordingly, the film hardness was 3H that was poor, and the visible light transmittance was poor. In the infrared shielding film of Comparative Example 7 formed by applying a coating containing 95 mass% of a resin and 5 mass% of a hydrolyzed condensate of a silicon alkoxide in the solid content of the binder after drying and curing, the curing was not sufficiently performed during sintering. Accordingly, the film hardness was 2H that was poor, and the abrasion resistance of the film was poor.

In contrast, in Examples 1 to 11, using transparent oxide particles having an average primary particle diameter of 10 to 100 nm, an infrared shielding film was formed by applying a coating in which the amount of an epoxy resin having a naphthalene skeleton in a molecular structure and the amount of a hydrolyzed condensate of a silicon alkoxide were 40 to 90 mass% and 10 to 60 mass%, respectively, in the solid content of a binder after drying and curing, a mass ratio of the transparent oxide particles / the solid content of the binder after drying and curing was in the range of 5/95 to 80/20. Since the average primary particle diameter of the ITO particles in the film was 10 to 100 nm in Examples 1 to 11, the visible light transmittance was good in all the examples, the near-infrared ray cut rate was good or excellent in all the examples, and the film hardness was 4H or greater that was excellent in all the examples. Since there was a naphthalene skeleton in the film in Examples 1 to 11, the abrasion resistance of the film was good in all the examples. Particularly, in the infrared shielding films formed by applying the coatings of Examples 2, 3, 5, and 9 to 11, since the mixing ratio between the epoxy resin having a naphthalene skeleton and the silicon alkoxide which were binder components was good, it was possible to increase the hardness of the binder components. In addition, since the mixing ratio between the transparent particles and the solid content of the binder after drying and curing was good, the film hardness was 6H that was excellent in Examples 2, 3, 5, and 9 to 11.

### Industrial Applicability

A coating for forming an infrared shielding film according to the invention is applied to a transparent substrate such as a glass or a film to form an infrared shielding film, and thereby, a glass or a film provided with an infrared shielding film can be obtained. The infrared shielding film is used for the purpose of shielding infrared rays entering a vehicle or a building through a glass for a vehicle or a glass or film for a building, and reducing the internal temperature rise and the cooling load.

## Claims

1. A coating for forming an infrared shielding film, the coating comprising:
transparent oxide particles having an average primary particle diameter of 100 nm or less as determined by the particle sizing method given in the present description; and
a binder containing an epoxy resin having a naphthalene skeleton in a molecular structure, a hydrolyzed condensate of a silicon alkoxide, and a solvent,
wherein the transparent oxide particles are metal oxide particles selected from tin-doped indium oxide particles, antimony-doped tin oxide particles, indium oxide particles, or zinc oxide particles,
a mass ratio of the transparent oxide particles to a solid content of the binder after drying and curing (transparent oxide particles/solid content of binder after drying and curing) is 5/95 to 80/20, and
in the case where the solid content of the binder after drying and curing is set to 100 mass%, the amount of the epoxy resin is 40 to 90 mass% and the amount of the hydrolyzed condensate of a silicon alkoxide is 10 to 60 mass%.

2. A transparent substrate provided with an infrared shielding film comprising:
a transparent substrate; and
an infrared shielding film formed on a surface of the transparent substrate, in which transparent oxide particles having an average primary particle diameter of 100 nm or less , as determined by the particle sizing method given in the present description, are dispersed in a matrix containing an epoxy resin having a naphthalene skeleton in a molecular structure and a silicon oxide, where the transparent oxide particles are metal oxide particles selected from tin-doped indium oxide particles,antimony-doped tin oxide particles,indium oxide particles, or zinc oxide particles .

3. A method for producing a transparent substrate provided with an infrared shielding film, the method comprising:
forming an infrared shielding film by applying the coating for forming an infrared shielding film according to claim 1 to a surface of a transparent substrate.

## Patentansprüche

1. Beschichtung zur Bildung eines infrarotabschirmenden Films, wobei die Beschichtung umfasst:
transparente Oxidpartikel mit einem durchschnittlichen Primärpartikeldurchmesser von 100 nm oder weniger, bestimmt durch das in der vorliegenden Beschreibung angegebene Verfahren zur Partikelgrößenbestimmung; und
ein Bindemittel, das ein Epoxidharz mit einem Naphthalin-Gerüst in der Molekularstruktur, ein hydrolysiertes Kondensat eines Siliziumalkoxids und ein Lösungsmittel enthält,
wobei die transparenten Oxidpartikel Metalloxidpartikel sind, ausgewählt aus zinndotierten Indiumoxidpartikeln, antimondotierten Zinnoxidpartikeln, Indiumoxidpartikeln oder Zinkoxidpartikeln,
ein Massenverhältnis der transparenten Oxidpartikel zu einem Feststoffgehalt des Bindemittels nach Trocknung und Aushärtung (transparente Oxidpartikel/Feststoffgehalt des Bindemittels nach Trocknung und Aushärtung) 5/95 bis 80/20 beträgt, und
wenn der Feststoffgehalt des Bindemittels nach dem Trocknen und Härten auf 100 Massenprozent eingestellt ist, der Anteil des Epoxidharzes 40 bis 90 Massenprozent und der Anteil des hydrolysierten Kondensats eines Siliziumalkoxids 10 bis 60 Massenprozent beträgt.

2. Transparentes Substrat, das mit einem infrarotabschirmenden Film versehen ist, umfassend:
ein transparentes Substrat; und
einen infrarotabschirmenden Film, der auf einer Oberfläche des transparenten Substrats gebildet ist, in dem transparente Oxidpartikel mit einem durchschnittlichen primären Partikeldurchmesser von 100 nm oder weniger, wie durch das in der vorliegenden Beschreibung angegebene Verfahren zur Partikelgrößenbestimmung bestimmt, in einer Matrix dispergiert sind, die ein Epoxidharz mit einem Naphthalin-Gerüst in einer Molekularstruktur und ein Siliziumoxid enthält, wobei die transparenten Oxidpartikel Metalloxidpartikel sind, die aus zinndotierten Indiumoxidpartikeln, antimondotierten Zinnoxidpartikeln, Indiumoxidpartikeln oder Zinkoxidpartikeln ausgewählt sind.

3. Verfahren zur Herstellung eines transparenten Substrats, das mit einem infrarotabschirmenden Film versehen ist, wobei das Verfahren umfasst:
Bilden eines infrarotabschirmenden Films durch Aufbringen der Beschichtung zur Bildung eines infrarotabschirmenden Films gemäß Anspruch 1 auf eine Oberfläche eines transparenten Substrats.

## Revendications

1. Revêtement pour former un film de protection contre l'infrarouge, le revêtement comprenant:
des particules d'oxyde transparent ayant un diamètre primaire moyen de 100 nm ou moins, tel que déterminé par la méthode de dimensionnement des particules décrite dans la présente description; et
un liant contenant une résine époxy dont la structure moléculaire comporte un squelette de naphtalène, un condensat hydrolysé d'un alcoxyde de silicium et un solvant,
ou les particules d'oxyde transparent sont des particules d'oxyde métallique choisies parmi les particules d'oxyde d'indium dopé à l'étain, les particules d'oxyde d'étain dopé à l'antimoine, les particules d'oxyde d'indium ou les particules d'oxyde de zinc,
un rapport de masse entre les particules d'oxyde transparent et le contenu solide du liant après séchage et durcissement (particules d'oxyde transparent/contenu solide du liant après séchage et durcissement) est compris entre 5/95 et 80/20, et
dans le cas où la teneur en matière solide du liant après séchage et durcissement est fixée à 100 % en masse, la quantité de résine époxy est comprise entre 40 et 90 % en masse et la quantité de condensat hydrolysé d'un alcoxyde de silicium est comprise entre 10 et 60 % en masse.

2. Substrat transparent pourvu d'un film de protection contre l'infrarouge comprenant :
un substrat transparent; et
un film de protection contre l' infrarouge formé sur une surface du substrat transparent, dans lequel des particules d'oxyde transparent ayant un diamètre primaire moyen de 100 nm ou moins, tel que déterminé par la méthode de dimensionnement des particules décrite dans la présente description, sont dispersées dans une matrice contenant une résine époxy ayant un squelette de naphtalène dans une structure moléculaire et un oxyde de silicium, où les particules d'oxyde transparent sont des particules d'oxyde métallique choisies parmi les particules d'oxyde d'indium dopées à l'étain, les particules d'oxyde d'étain dopées à l'antimoine, les particules d'oxyde d'indium, ou les particules d'oxyde de zinc.

3. Méthode de production d'un substrat transparent pourvu d'un film de protection contre l'infrarouge, comprenant:
former un film de protection contre l'infrarouge en appliquant le revêtement pour former un film de protection contre l'infrarouge selon la revendication 1 sur une surface d'un substrat transparent.
